# EUROPÄISCHE PATENTSCHRIFT

(11) **EP 2 157 895 B1**
(45) Veröffentlichungstag und Bekanntmachung des Hinweises auf die Patenterteilung: **29.07.2015**
(21) Anmeldenummer: 08759200.2
(22) Anmeldetag: 12.06.2008
(51) Int. Cl.: A47J 31/44

(54) **GETRÄNKEZUBEREITUNGSGERÄT**
DRINKS PREPARATION DEVICE
APPAREIL DE PRÉPARATION DE BOISSONS

(30) Priorität: 21.06.2007 DE 202007008813 U
(43) Veröffentlichungstag der Anmeldung: 03.03.2010
(73) Patentinhaber: Eugster/Frismag AG, 8580 Amriswil (CH)
(72) Erfinder: MAHLICH, Gotthard, 61476 Kronberg (DE)
(74) Vertreter: Schubert, Siegmar
(86) Internationale Anmeldenummer: PCT/EP2008/004695
(87) Internationale Veröffentlichungsnummer: WO 2008/155056

(56) Entgegenhaltungen:
- EP-A2- 1 715 779
- WO-A1-96/31125
- DE-U1-202007 002 910
- FR-A- 2 842 090
- US-A1- 2006 254 428
- US-B1- 6 405 637

## Beschreibung

Die Erfindung betrifft ein Getränkezubereitungsgerät mit einer Brühkammer mit einem Auslauf, die zur Aufnahme von losem Kaffeepulver und Zubereitung eines Getränkes durch deren Gebrauch geeignet ist.

Zum Stand der Technik gehören Getränkezubereitungsgeräte für den Einsatz von losem Kaffeepulver oder vorportionierten Kaffee- oder Milchkonzentrat oder Milchpulver-Portionseinheiten. Die Portionseinheiten können in Form von Aluminium- oder Kunststoffkapseln oder in Form von Papierpouches vorliegen, wobei der Inhalt der Portionseinheiten für die Zubereitung einer üblichen Menge Kaffee, Milch oder Milchschaum für eine Tasse eines Kaffee-, Milch- oder Kaffee-Milchgetränkes ausgelegt ist.

Bekannte handelsübliche Getränkezubereitungsgeräte sind mit einer Brüheinheit ausgebildet, die nur eine einzige Brühkammer für den Gebrauch von losem Kaffeepulver enthält, und für die Zubereitung von Milchschaum mit einer Dampfdüse mit oder ohne Aufschäumhilfe ausgestattet sind. Kaffeezubereitungsgeräte für die Verwendung von losem Kaffeepulver sind mit Brühkammern in Form von Brühkolben oder integrierten Brühkammern die aus in den Zubereitungsgeräten integrierten Kaffeemühlen mit gemahlenem Kaffeepulver versorgt werden, ausgestattet. Die Zubereitung von Milchschaum erfolgt dabei unter Verwendung von Heißdampf und Frischmilch. Die Milchschaumzubereitung wird dabei entweder mittels der Dampfdüse von Hand in einem separaten mit Frischmilch gefüllten Behälter durchgeführt oder erfolgt automatisch, indem mittels des mit hoher Geschwindigkeit aus dem Dampfgenerator aus- strömenden Dampfes in einer speziellen Schäumvorrichtung Milch aus einem externen Behälter angesaugt und aufgeschäumt wird.

Bei handelsüblichen Getränkezubereitungsgeräten mit einer Brüheinheit, die für die Verwendung von vorportionierten Portionseinheiten für Kaffee- oder Milchextrakt- oder Milchpulver ausgelegt sind, ist diese mit nur einer Aufnahmekammer für solche Portionseinheit ausgestattet, wobei in diesem Fall in die gleiche Aufnahmekammer, in die eine vorportionierte Kaffeeportionseinheit zur Getränkezubereitung eingelegt werden kann, statt dessen eine vorportionierte Milch- oder Milchpulverportionseinheit eingebracht und zur Milch- oder Milchschaumerzeugung benutzt werden kann. Die Portionseinheiten liegen dabei in Form von Aluminium oder Kunststoffkapseln vor (EP 1 06 04 915 A1).

Es wurde auch ein Getränkezubereitungsgerät für den parallelen Einsatz von vorportionierten Portionseinheiten für Kaffee- und Milchpulver vorgeschlagen, bei dem sowohl eine Aufnahmekammer für eine Kaffeeportionseinheit als auch eine Aufnahmekammer für eine Milchpulverportionseinheit vorgesehen ist.

Bei den bekannten Getränkezubereitungsgeräten, die mit gemahlenem losem Kaffeepulver arbeiten und zur Milchschaumzubereitung mit einer Dampfdüse oder automatischen Schäumvorrichtungen ausgestattet sind, ist es zur Zubereitung eines Kaffee-Milchgetränkes notwendig, in zwei aufeinander folgenden Schritten die Kaffee und die Milchschaumzubereitung vorzunehmen. Da diese Geräte bevorzugt den gleichen Wärmetauscher für die Brühwassererhitzung und für die Dampferzeugung verwenden und für die Dampferzeugung höhere Temperaturen als für die Brühwasserbereitung erforderlich sind, ergeben sich verschiedene Aufheiz- oder Abkühlzeiten für den Wärmetauscher und damit deutliche Zeitverzögerungen für die jeweils folgende Zubereitung.

Ebenso ergeben sich in Zubereitungsgeräten, deren Brüheinheiten nur mit einer Aufnahmekammer sowohl für die Aufnahme von Kaffeeportionseinheiten für die Zubereitung von Kaffee als auch für die Aufnahme von Milch- oder Milchpulverportionseinheiten für die Zubereitung von Milchschaum ausgestattet sind, wobei der Milchschaum nicht aus Frischmilch mittels Dampf, sondern aus Milchpulver mit Wasser der gleichen Temperatur wie für die Kaffeezubereitung erzeugt wird, also keine Verzögerungen durch Aufheiz- oder Abkühlvorgänge des Wärmetauschers notwendig sind, deutliche verzögerte Zubereitungsabläufe, da, bedingt durch die Nutzung der gleichen Brüh- oder Aufnahmekammer für Kaffee-Milch- oder Milchpulverportionseinheiten es zwangsläufig erforderlich ist, dass die jeweils zweite Zubereitungsart in einem zweiten Arbeitsgang erfolgen muss, d.h. dass z.B. nach einem Kaffeezubereitungszyklus erst die verbrauchte Kaffeeportionseinheit aus der Brüheinheit entsorgt werden muss, daran anschließend die Milch- oder Milchpulverportionseinheit in die Brüheinheit eingelegt und schließlich nach dem Zubereitungszyklus entsorgt werden muss.

Die vorgeschlagene Bauform eines Zubereitungsgerätes, deren Brüheinheit mit einer Aufnahmekammer für Kaffeeportionseinheiten und einer Aufnahmekammer für eine Milchpulverportionseinheit ausgestattet ist, vermeidet zwar die Verzögerung durch in Reihenfolge zu erfolgendes Beschicken und Entsorgen, ist aber ausschließlich für die Verwendung von zwei Portionskapseln ausgelegt.

Eine solche Vorrichtung ist aus der DE 2007 002 910 U1 bekannt.

Der Nachteil der Zubereitungsgeräte die mit losem Kaffeepulver arbeiten ist also, dass für die Zubereitung von Milchschaum das Zubereitungsgerät mit einer Dampferzeugungsvor- richtung ausgestattet sein muss, wobei für die Dampferzeugung eine höhere Temperatur benötigt wird als für die Kaffeezubereitung, was bei der üblichen Nutzung des gleichen Wärmetauschers für die Brühwasser -und die Dampferzeugung zu deutlichen Verzögerungen für die Zubereitung eines Kaffee-Milchgetränkes bedingt durch die Aufheiz- oder Abkühlphasen des Wärmetauschers führt.

Der Nachteil der Zubereitungsgeräte die mit Kaffeeportionseinheiten arbeiten ist, dass sich deutliche Verlängerungen der Kaffee-Milchgetränke-Zubereitungen bedingt durch die nacheinander zu erfolgenden Beladungs- und Entsorgungsschritte ergeben und die Kaffeezubereitung nicht mit frischem Kaffeemahlgut erfolgt.

Die vorliegende Erfindung geht von der Aufgabe aus, ein Getränkezubereitungsgerät vor- zuschlagen, mit dem die Getränkezubereitung, insbesondere die Kaffee und / oder die Milch- oder Milchschaumerzeugung flexibler in einem rationelleren Zubereitungsablauf erfolgen kann, ohne dass Verzögerungen durch Aufheiz- oder Abkühlphasen des Wärmetauschers oder Beschickungs- und Entsorgungsvorgänge entstehen, die Kaffeezubereitung mit losem bevorzugt frischem Kaffeemahlgut erfolgt und für die Milchschaumerzeugung keine Frischmilch erforderlich ist.

Zu diesem Zweck wird ein Getränkezubereitungsgerät mit den Merkmalen des Anspruches 1 vorgeschlagen.

Mit Zubereitungsgeräten dieser Art können die Kaffeezubereitung einerseits und die Milch- oder Milchschaumerzeugung andererseits je nach Vorgabe bzw. Programmierung einer Steuereinheit einzeln oder zeitlich versetzt nacheinander ablaufen, ohne dass Zubereitungsverzögerungen durch Beschickungs- oder Entsorgungsvorgänge entstehen und die Kaffeezubereitung mit frischem Kaffeepulver erfolgt und die Milchschaumerzeugung ohne Verwendung von Frischmilch mittels vorportionierten Milchpulvereinheiten erfolgt.

Das erfindungsgemäße Zubereitungsgerät ist zur rationellen Getränkezubereitung vielseitig einsetzbar: Zum Beispiel wird für die Zubereitung von Kaffee bzw. Espresso , die in der Brüheinheit liegende Kaffeebrühkammer von Hand oder wie in Espresso-Vollautomaten üblich, mittels einer integrierten Kaffeemühle mit gemahlenem Kaffeepulver beschickt. Für die Milch- oder Milchschaumerzeugung ist gemäß Anspruch1 in der Brüheinheit zusätzlich eine zweite Aufnahmevorrichtung vorgesehen, in die eine Einportion-Milch- oder Milchpulverportionseinheit, im Folgenden als Milchpulverportionseinheit bezeichnet, eingebracht werden kann, wobei der Inhalt der Milchpulverportionseinheit für die Zubereitung einer üblichen Menge Milch oder Milchschaum für eine Tasse eines Milch oder Kaffee-Milchgetränkes ausgelegt ist. Diese Milchpulverportionseinheit, kann sowohl eine Milchpulverportionseinheit mit einer integrierten Schäumvorrichtung oder eine Milchpulverportionseinheit ohne eine integrierte Schäumvorrichtung sein. Für die Verwendung einer Milchpulverportionseinheit ohne eine integrierte Schäumvorrichtung muss die Aufnahmevorrichtung mit einer externen Schäumvorrichtung ausgestattet werden. Die Zubereitungsgeräte können dabei jeweils für die Verwendung der unterschiedlichen Milchpulverportionseinheit umgerüstet werden. Die Zubereitung von Kaffee oder Milch- oder Milchschaum erfolgt für alle Zubereitungsarten mit Brühwasser gleicher Temperatur.

Die unterschiedlichen Getränkearten können dabei unabhängig voneinander erzeugt werden. Es ist aber auch möglich, insbesondere zur Zubereitung von Cappuccino die Brühkammer mit losem Kaffeepulver zu beschicken und parallel dazu eine Portionseinheit in die dafür vorgesehene Aufnahmekammer zu legen. Durch eine Steuerungsanordnung können die Zubereitungen des gebrühten Kaffees und Milch oder eines Milchschaums gleichzeitig, oder zeitlich versetzt in gewünschter Reihenfolge erfolgen, und ebenfalls kann eine Mengensteuerung, dem individuellen Geschmack entsprechend, für die verschiedenen Ingredienzien erfolgen. Die Steuerung kann dabei, je nach Gerätetyp, von Hand oder über eine Programmsteuerung erfolgen. Die Milchpulverportionseinheiten können mit einer mechanischen, optischen, elektrischen oder magnetischen Kennung ausgestattet sein, die mit entsprechenden Leseeinrichtungen an der Brüheinheit bzw. an der Aufnahmevorrichtung für die Portionseinheit erfasst werden, so dass die Zubereitungsart und die Getränkemenge mittels der Steuervorrichtung die mit den Ausgängen der Leseeinrichtungen in signalübertragender Verbindung steht, identifiziert werden kann, d.h. es kann mittels der Leseeinrichtung und der Steuerungsanordnung die Getränkezubereitung getränkeartabhängig selbsttätig erfolgen, wozu insbesondere Reihenfolge und Menge der Wasserzufuhr jeweils in die Kaffeebrühkammer oder die Aufnahmekammer für die Milchpulverportionseinheit gesteuert werden können. Während seiner Zubereitung wird der Kaffee durch einen Auslauf seiner Brühkammer aus dieser entleert. Ein Abfluss der Milch bzw. des Milchschaums erfolgt aus der Milchpulverportionseinheit mit integrierter Schäumvorrichtung direkt aus der Bodenöffnung der Portionseinheit oder bei Milchpulverportionseinheiten ohne integrierter Schäumvorrichtung aus dem Auslauf der nachgeschalteten Schäumvorrichtung, deren Eingangsöffnung mit der Auslauföffnung der Portionseinheit in fluidleitender Verbindung steht, wobei der Kaffee und die Milch bzw. der Milchschaum von dem gleichen Aufnahmegefäß wie für den Kaffee aufgenommen werden können. Wie oben erwähnt kann die vielseitig einsetzbare Brüheinheit dazu benutzt werden, nur Kaffee zuzubereiten oder nur Milch bzw. Milchschaum aufzubereiten, wozu also nur die Kaffeebrühkammer mit losem Kaffeepulver beschickt wird oder die Aufnahmevorrichtung die ihr zugeordnete Milch- oder Milchpulverportionseinheit aufnimmt. Damit die Steuerungsanordnung das Vorhandensein einer Portionseinheit in der Aufnahmevorrichtung erkennt, kann an der Aufnahmevorrichtung für die Milchpulverportionseinheit eine Prüfvorrichtung angeordnet und als Abtasteinrichtung ausgebildet sein, die in Verbindung mit der Steuerungsanordnung eine Heißwasserzufuhr nur dann zu der Aufnahmevorrichtung freischaltet, wenn eine Milchpulverportionseinheit eingesetzt ist. Damit wird eine sichere Funktion der Brüheinheit bei einseitiger oder beidseitiger Belegung der Brühkammer bzw. Aufnahmevorrichtung gewährleistet.

Ein wesentlicher Aspekt des Zubereitungsgerätes besteht damit darin, dass dieses sowohl nur zur Zubereitung von Kaffee als auch zur Zubereitung von Milch und Milchschaum, insbesondere für Cappuccino oder Latte Macchiato, ohne Frischmilch geeignet ist. Es kann hierzu in einer ersten Ausführungsform unkompliziert ohne gerätegebundene Schäumvorrichtung auskommen, indem handelsübliche Milch- oder Milchpulverportionseinheiten mit integrierter Schäumvorrichtung eingesetzt werden. Für die Verwendung von Milchpulverportionseinheiten, die keine integrierte Schäumvorrichtung zur Zubereitung von Milchschaum enthalten, ist es besonders vorteilhaft, die Aufnahmevorrichtung für die Milch- oder Milchpulverportionseinheit mit einer Schäumvorrichtung auszustatten, die unterhalb der Milchpulverportionseinheit Aufnahmevorrichtung angeordnet ist und mit deren Auslauf in fluidleitender Verbindung steht.

Bei Verwendung Milchpulverportionseinheit mit integrierter Schäumvorrichtung kann für den Ablauf des Milchgetränkes oder des Milchschaums unterhalb der Aufnahmevorrichtung ein Ablauftrichter vorgesehen sein. Sowohl die Schäumvorrichtung als auch der Ablauftrichter können austauschbar oder als auswechselbare Wegwerfteile verwirklicht sein, um ohne zeitaufwendige Spül- und Reinigungsvorgänge einen hygienischen Betrieb der Schäumvorrichtung zu gewährleisten. Gleichwohl ist es möglich, für die Umrüstung des Getränkezubereitungsgerätes auf die Verwendung einer Milchpulverportionseinheit mit einer integrierten Schäumvorrichtung, die Schäumvorrichtung gegen einen Ablauftrichter wechselbar zu gestalten. Damit ist das Getränkezubereitungsgerät sowohl für die Verwendung von Milchpulverportionseinheiten mit und ohne integrierter Schäumvorrichtung geeignet. Erfindungsgemäß, in jedem Fall ist die Zubereitungsgeräte mit einer zusätzlichen Dampfdüse auszustatten, die es ermöglicht konventionell mit Dampf und Frischmilch Milchschaum zuzubereiten oder mittels Dampf eine Flüssigkeit zu erhitzen.

Die Ausläufe der in der Brüheinheit angeordneten Kaffeebrühkammer und der Milchpulverportionseinheit mit einer integrierten oder nachgeschalteten Schäumvorrichtung sind zweckmäßigerweise so angeordnet, dass die in ihnen bereiteten Produkte jeweils in ein eigenes Aufnahmegefäß geleitet werden können. Statt dessen ist es aber in beiden Fällen der in einer Baueinheit integrierten oder nicht integrierten Anordnung der Brüheinheit und der Schäumvorrichtung möglich, deren Ausläufe zu einem gemeinsamen Auslaufkanal zusammenzuführen, um durch diesen ein einheitliches Getränkeprodukt oder zeitlich hintereinander zwei Getränkeprodukte in das Aufnahmegefäß zu leiten.

Zur Beschickung der Aufnahmevorrichtung für die Milchpulverportionseinheiten ist die Aufnahmevorrichtung mit einem um eine im Wesentlichen waagerechte Achse aufklappbarem Aufnahmevorrichtung-Oberteil auszubilden.

Weiterhin kann zur hygienischen Reinigung der Kaffeebrühkammer und der Aufnahmevorrichtung für die Milchpulverportionseinheit und der Schäumvorrichtung eine gleichzeitig aktivierbaren Spülvorrichtung vorgesehen sein, wobei eine Spülung vor oder nach einem Getränkezubereitungszyklus erfolgen kann.

Zur flexiblen Zubereitung verschiedener Getränke sowie zur Milchaufbereitung, insbesondere Herstellung von Milchschaum, mündet eine Wasserzufuhrleitung, die insbesondere eine Heißwasserzufuhrleitung ist, unter Zwischenschaltung einer Ventilanordnung in die Kaffeebrühkammer und in die Aufnahmevorrichtung für die Milchpulverportionseinheit, wobei die Ventilanordnung mit einer solchen Steuerungsanordnung aktiviert werden kann, dass Wasser im Wesentlichen gleichzeitig der Kaffeebrüheinheit und der Aufnahmevorrichtung für die Milchpulverportionseinheit zugeführt oder diesen beiden Vorrichtungen zeitlich gestaffelt zugeführt wird oder aber lediglich nur der Kaffeebrühkammer oder nur der Aufnahmevorrichtung für die Milchpulverportionseinheit zugeleitet wird. Mit der Steuerungsanordnung werden also die Wasserzufuhr, die Zubereitungsreihenfolge und die jeweils zu dosierenden Mengen gesteuert. Damit ergeben sich insbesondere für ein Kaffee-Milchgetränk folgende Möglichkeiten: Gleichzeitige Zubereitung von Kaffee und Milch oder Milchschaum oder erst Brühen von Kaffee und dann Zubereitung von Milchschaum oder aber erst Zubereitung von Milchschaum und dann Brühen von Kaffee oder erst Milch, dann Milchschaum und schließlich Espresso. Dabei kann zusätzlich die verabreichte Wassermenge und die daraus resultierende Getränkeproduktmenge gewählt werden. Die Wasserzufuhr in die Kaffeebrühkammer und/oder in die Aufnahmevorrichtung für die Milchpulverportionseinheit erfolgt dabei mittels gesteuerter Ventile, die bevorzugt von Ausgängen der Steuerungsanordnung gesteuert werden. Eine Anordnung der gesteuerten Ventile kann bevorzugt als Keramikscheibenventil realisiert sein, das zur Zubereitung hochwertiger Getränke besonders geeignet ist. Die gesteuerten Ventile könne aber auch als einzelne Magnetventile oder als Schlauchklemmventile verwirklicht sein. Eine Zubereitungswasser-Mengensteuerung und die zeitliche Reihenfolge der Zubereitungsabläufe können mittels der genannten Ventile und kontrolliert mittels in den Versorgungsleitungen liegenden Durchflussmessern (flowmeter) und der Steuervorrichtung oder von Hand dem subjektiven Geschmack entsprechend erfolgen.

Weiterhin ist es zur Erhöhung der Betriebssicherheit zweckmäßig, Prüfelemente zum Wasserzufuhrstop bei geöffneter Aufnahmevorrichtung für die Milchpulver-Portionseinheit in Verbindung mit der Steuerungsanordnung und den gesteuerten Ventilen, oder mittels mechanischer Sperrvorrichtungen oder elektrischer Vorrichtungen, den Zubereitungswasserzulauf z.B. durch eine Unterbrechung der elektrischen Versorgungsleitung der Wasserpumpe zu unterbrechen.

Die Zubereitung eines gewünschten Getränkes fest programmiert automatisch erfolgen, indem die Reihenfolge der Zubereitung der Getränkekomponenten sowie deren Menge, insbesondere für Kaffee- und Milchschaumerzeugung, fest programmiert sind. Vorteilhaft können mehrere solcher Programme für verschiedene Getränke in der Steuerungsanordnung gespeichert sein und mittels einer Auswahlvorrichtung ausgewählt werden. Die Steuerung kann aber auch von Hand, dem subjektiven Geschmack entsprechend erfolgen.

Ausführungsbeispiele der Erfindung werden im Folgenden anhand einer Zeichnung mit 8 Figuren näher beschrieben, woraus sich weitere vorteilhafte Merkmale der Erfindung ergeben können.

Es zeigen:

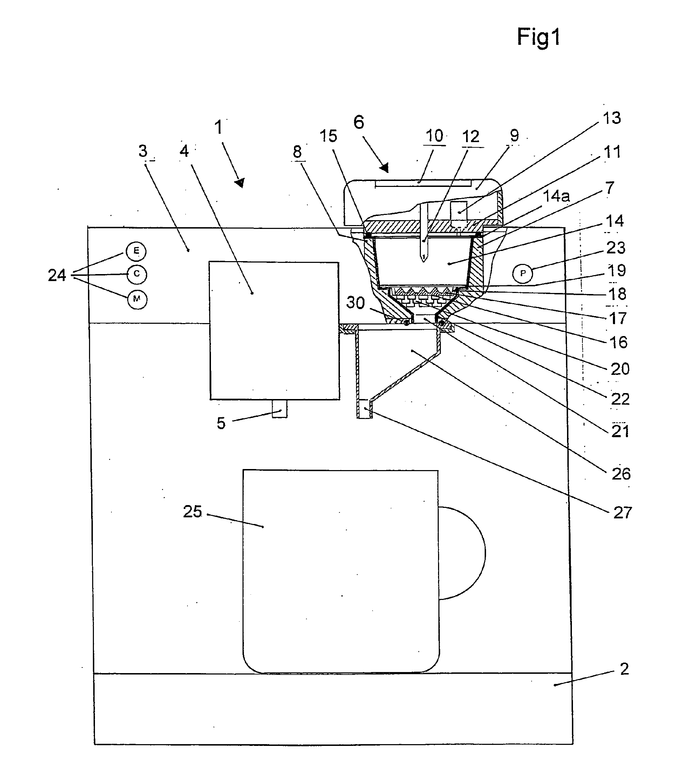

- Figur 1: Eine teilweise geschnittene Vorderansicht eines schematisch dargestellten Getränkezubereitungsgeräts in einer ersten Ausführungsform mit einer Brüheinheit mit einer Brühkammer für loses Kaffeepulver und einer Aufnahmevorrichtung für eine Milchpulverportionseinheit mit einer eingesetzten Milchpulverportionseinheit mit einer integrierten Schäumvorrichtung, mit an die Wasserzuführungsleitung der Brüheinheit angedockter Wasserzuführungsleitung und in die Milchpulverportionseinheit eingestochener Wasserzuführungsnadel und einem Mikroschalter als Prüfelement für die Befüllungskontrolle der Aufnahmevorrichtung, wobei die Kaffeebrühkammer nicht detailliert dargestellt ist.

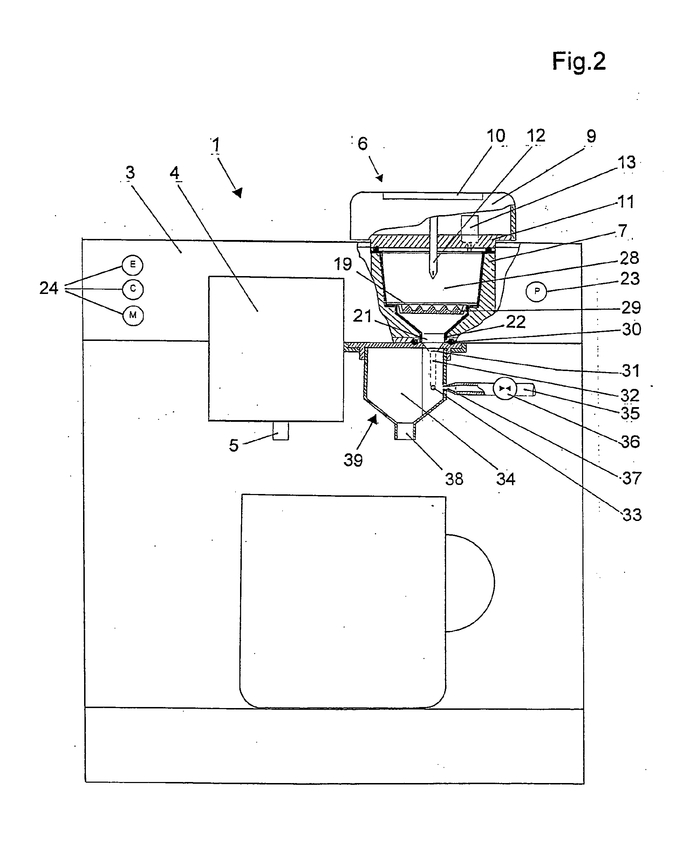

- Figur 2: Eine teilweise geschnittene Vorderansicht eines schematisch dargestellten Getränkezubereitungsgeräts in einer zweiten Ausführungsform mit einer konventionellen Brühkammer für loses Kaffeepulver und einer Aufnahmevorrichtung für eine Milchpulverportionseinheit mit einer eingesetzten Portionseinheit ohne einer integrierte Schäumvorrichtung mit einer nachgeschalteten Schäumvorrichtung, mit an die Wasserzuführungsleitung der Brüheinheit angedockter Wasserzuführungsleitung und in die Milchportionseinheit eingestochener Wasserzuführungsnadel und einem Mikroschalter als Prüfelement für die Befüllungskontrolle der Aufnahmevorrichtung, wobei die Kaffeebrühkammer nicht detailliert dargestellt ist.
- Figur 3: Eine Seitenansicht eines schematisch dargestellten Getränkezubereitungsgerätes mit aufgeschwenktem Oberteil.
- Figur 4: Ein Blockschaltbild der Keramikventilsteuerung.
- Figur 5a: Ein Ablaufdiagramm für die Zubereitung von Cappuccino.
- Figur 5b: Ein Ablaufdiagramm für die Zubereitung von Espresso.
- Figur 5c: Ein Ablaufdiagramm für die Zubereitung von Latte Macchiato.
- Figur 6: Einen Schnitt durch den Schäumzylinder der Schäumvorrichtung.

Das in den Figuren 1, 2 und 3 dargestellte Getränkezubereitungsgerät 1 ist speziell zur wahlweisen Zubereitung von Espresso, Cappuccino oder Latte Macchiato, einer Getränkekombination aus einer Schichtung von Milch darüber liegendem Espresso und wiederum darauf liegendem Milchschaum, ausgebildet und weist hierzu oberhalb eines Gerätesockels 2 und eines Aufnahmegefäßes 25 eine Brüheinheit 3 mit einer Kaffeebrühkammer 4 für gemahlenes Kaffeepulver und eine Aufnahmevorrichtung 6 für eine Milchpulverportionseinheit 14, 28 auf. Die Kaffeebrühkammer 4 ist dabei nicht detailliert dargestellt.

Das Getränkezubereitungsgerät umfasst eine Steuerungsanordnung 48, die mit einer Gruppe Programmwahltasten 24 in Verbindung steht. Mittels dieser Programmwahltasten 24 kann je nach Geräteausstattung eine Festprogrammierung für eine bestimmte Getränkeart mit zugehöriger Reihenfolge und Mengenzuordnung der Getränkebestandteile gewählt und gestartet werden oder aber ein Programm vorprogrammiert werden.

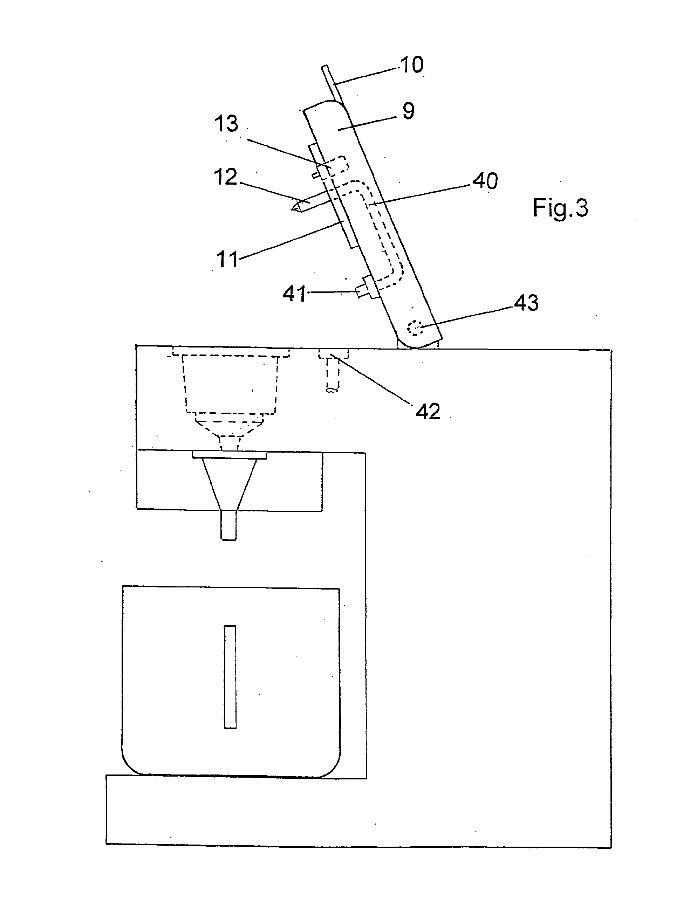

In Figur 1 ist in die Aufnahmekammer 7 der Aufnahmevorrichtung 6 eine gekapselte Milchpulverportionseinheit 14 mit einer integrierten Schäumvorrichtung 39 eingebracht. Die Aufnahmekammer 7 für die Milchpulverportionseinheit besteht aus einer der äußeren Form der Milchpulverportionseinheit entsprechenden Form, wobei die Milchpulverportionseinheit mit einem oberen Deckelrand 14a der einen größeren Durchmesser als die Portion selbst aufweist, auf dem oberen Rand 8 der Aufnahmekammer 7 aufliegt. Die Aufnahmevorrichtung 6 ist mit einem aufklappbaren Oberteil 9 versehen, welches um eine waagerechte Achse 43 aufschwenkbar ist, wie in Figur 3 gezeigt. Für den Schwenkvorgang ist an das Oberteil ein Betätigungsgriff 10 angebracht. In dem Oberteil 9 liegt eine Deckelplatte 11 mit einer Dichtung 15 die in geschlossenem und verriegeltem Zustand der Aufnahmevorrichtung 6 auf dem Deckelrand 14a der Portionseinheit 14 aufliegt und dadurch die Aufnahmevorrichtung druck- und flüssigkeitsdicht verschließt. Die Verriegelungsvorrichtung ist nicht dargestellt. In dem Oberteil 9 sind weiterhin die Wasserzuführungsleitung 40 mit dem Anschlussstutzen 41 für den Anschluss an die Wasserzuleitung 42 der Brüheinheit 3 und der Wasserzuführungsnadel 12 für die Milchpulverportionseinheit 14 sowie das Prüfelement 13 zur Befüllungskontrolle der Aufnahmevorrichtung 6 angeordnet. Die Wasserzuführnadel 12 ist bei geschlossener und verriegelter Aufnahmevorrichtung in die Milchpulverportionseinheit 14 eingestochen. Die in die Milch- oder Milchpulverportionseinheit 14 integrierte Schäumvorrichtung umfasst an deren Boden eine innen liegende Pyramidenplatte 16, die mit Pyramiden 17 eine über ihr angeordnete Trennfolie 19 durchstoßen kann. Die Pyramidenplatte 16 weist an ihrem Rand einen Siebkamm 29 und unter ihrer Bodenfläche ein Schäumlabyrinth 20 zur Milchschaumerzeugung auf. Die Milchpulverportionseinheit 14 weist an ihrem unteren sich trichterförmig verengenden Ende einen Auslauf 21 für den entstandenen Milchschaum aus. Die Aufnahmevorrichtung 6 ist mit einem Auslaufdurchbruch 22 versehen durch den der Auslauf 21 der Milchpulverportionseinheit durchtritt. Unter dem Auslaufdurchbruch 22 ist ein auswechselbarer Ablauftrichter 26 mit einem Milchschaumauslauf 27 angeordnet.

In Figur 2 ist in die Aufnahmekammer 7 der Aufnahmevorrichtung 6 eine gekapselte Milchpulverportionseinheit 28 ohne eine integrierte Schäumvorrichtung eingebracht. Zur Verwendung einer derartigen Milchpulverportionseinheit ohne eine integrierte Schäum-vorrichtung ist das Zubereitungsgerät 1 zusätzlich mit einer externen Schäumvorrichtung 39 versehen. Die Schäumvorrichtung 39 ist unterhalb des Auslaufdurchbruches 22 der Aufnahmevorrichtung 6 angeordnet und ihre Einlauföffnung 31 steht in fluidleitender und fluiddichter Verbindung zu der Auslauföffnung 21 der Milchpulverportionseinheit 28. Die Schäumvorrichtung 39 kann für die Verwendung von Milchpulverportionseinheiten ohne integrierte Schäumvorrichtung unter den Auslaufdurchbruch 22 durch einen Einschub-, Schwenk-, Klipp- oder Schraubvorgang einfach positioniert bzw. gegen den Ablauftrichter 26 ausgetauscht werden.

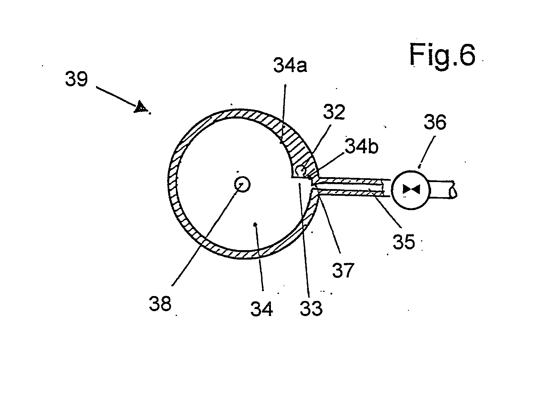

In Verlängerung 32 der Einlauföffnung 31 weist die Milchschäumvorrichtung 39 mit einem inneren Schäumzylinder 34, wie in Figur 6 dargestellt, in einem verdickten Abschnitt einer spiralförmig geformten Schäumzylinderwand 34a eine Milcheintrittsdüse 33 mit einem horizontalen Düsenausgang und einer vertikalen Bohrung auf, die mit dem Milchauslauf 21 der Milch- und Milchpulverportionseinheit 28 in Verbindung steht. Der Düsenausgang der Milcheintrittsdüse 33 ist in axialer Verlängerung einer Luftdüse 37 angeordnet, wie aus Figur 6 im einzelnen ersichtlich, in der die Schäumvorrichtung 39 in Höhe des Düsenausganges der Milcheintrittsdüse 33 und einer Luftdüse 37 geschnitten dargestellt ist. Die Luftdüse 37 wird über eine Luftleitung 35, die mit einem Sperrventil 36 absperrbar ist, mit atmosphärischer Luft versorgt. Der in dem Schäumzylinder 34 gebildete Milchschaum kann durch eine Bodenöffnung 38 des Schäumzylinders 34, der somit einen Milchschaumauslauf bildet, in das Aufnahmegefäß 25 entlassen werden.

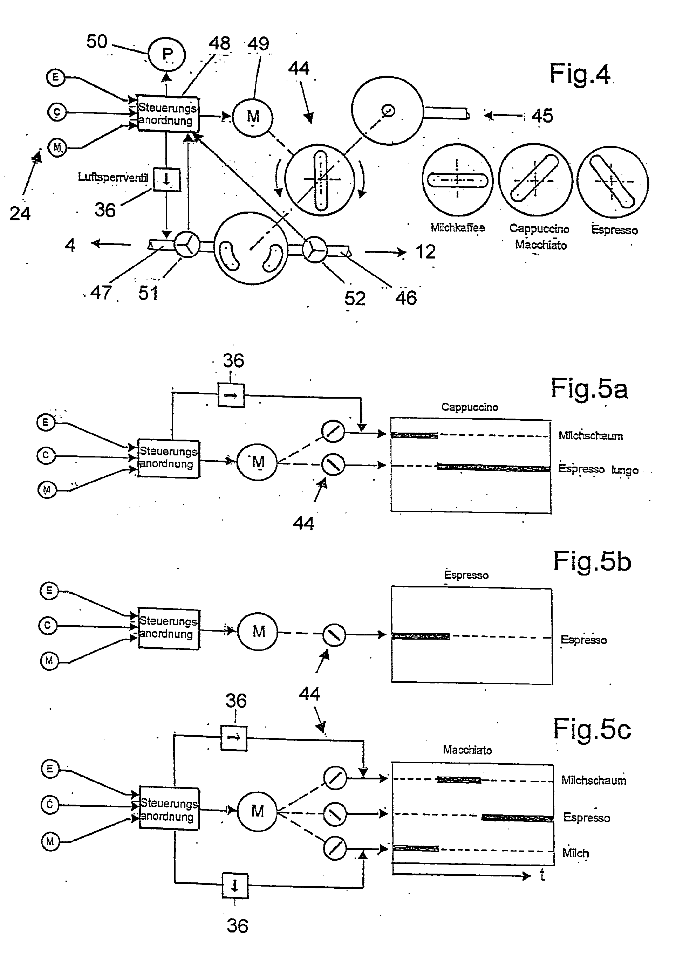

In Figur 4 ist das Zweiwege-Keramikventil 44, welches an die Heißwasserzuführung 45 angeschlossen ist, mit drei auseinandergenommen dargestellten Keramikscheiben gezeigt. Von den drei Scheiben weist eine äußere Scheibe einen Ausgang 47a auf, an dem die Brühwasserzulaufleitung 47 zu der Kaffee-Brühkammer 4 angeschlossen ist, und einen weiteren Ausgang 46a, der über die Heißwasserzulaufleitung 46 mit der Heißwasserzulaufnadel 1 2 in der Aufnahmevorrichtung 6 verbunden ist. Je nach der Stellung der mittleren Scheibe des Keramikventils 44 kann der Ausgang 47a oder der Ausgang 46a zur Zubereitung von Kaffee oder Milchschaum beaufschlagt werden. In der in dem linken Teil der Figur 4 dargestellten Position der mittleren Scheibe des Keramikventils 44 befindet sich diese in ihrer Nullstellung. Zur Zubereitung eines Getränkes kann je nach gewünschter Getränkeart die Scheibe entweder von Hand oder programmgesteuert mittels der Steuerungsanordnung 48 und eines Motors 49 nacheinander in die Position "Espresso" oder "Milch/Milchschaum", "Latte Macchiato" oder "Milchkaffee" gedreht werden. Diese möglichen Drehstellungen sind für die freigestellte mittlere Scheibe in dem rechten Teil der Figur 4 angezeigt. Nach einem Zubereitungszyklus wird die mittlere Scheibe entweder automatisch oder von Hand oder zweckmäßigerweise mit dem Öffnungsvorgang der Brühkammer 4 oder der Aufnahmevorrichtung 6 gekoppelt, wieder in ihre Nullstellung gedreht.

Die Figuren 5a bis 5c zeigen die Stellung des von der Steuerungsanordnung 48 gesteuerten Keramikventils 44 und des Luftsperrschiebers 36 und die zeitlichen Ablaufdiagramme für die verschiedenen Getränkezubereitungen. Das in den Figuren 1 bis 6 dargestellten Getränkezubereitungsgerät 1 ist speziell zur wahlweisen Zubereitung von Espresso, Cappuccino oder Latte Macchiato ausgebildet.

Mit der Gruppe Programmwahltasten 24 kann je nachdem, welche Taste betätigt wird, mit der Taste E Espresso, mit der Taste C Cappuccino und mit der Taste M Latte Macchiato erzeugt werden. Mittels der Gruppe Programmwahltasten 24 oder eines Programmwahlschalters oder kann je nach Geräteausstattung eine Festprogrammierung für eine bestimmte Getränkeart mit zugehöriger Reihenfolge und Mengenzuordnung der Getränkebestandteile gewählt und gestartet werden oder aber ein Programm zunächst vorprogrammiert und dann gestartet werden, wobei eine Steuerungsanordnung 48 die von den Programmwahltasten 24 direkt angewählt oder vorprogrammiert werden kann eine Ventilanordnung steuert die die Wasserzulaufwege für die Kaffeebrühkammer 4 oder die Aufnahmevorrichtung 6 freischaltet. Außerdem wird mittels der Steuerungsanordnung 48 auch das in der Luftleitung 35 liegende Luftsperrventil 36 gesteuert.

Eine sehr einfache Lösung kann statt dessen auch mit einem von Hand betätigten Wahlhebel, der mit einem mechanischen Zweiwegeventil mit Nullstellung, das bevorzugt ein Zweiwege-Keramikscheibenventil ist, verbunden ist oder mit Schlauchklemmventilen zur alternativen oder kumulativen Wasserzufuhr zu der Kaffeebrühkammer 4 und der Aufnahmevorrichtung 6 für die Milchpulverportionseinheit 14, 28 realisiert werden, wobei auch die Zubereitungswasser-Mengensteuerung von Hand nach subjektivem Geschmack erfolgen kann.

Nach Einschalten des Kaffeezubereitungsgeräts mit einem Netzschalter 23 und Wahl des zuzubereitenden Getränkes durch Betätigung einer der Programmwahltasten der Gruppe 24 wird aus einem Wasservorratsgefäß Wasser durch einen Durchlauferhitzer gepumpt und das Heißwasser über die angesteuerte Ventilanordnung die als Keramikscheibenventil 44 oder durch Magnet- oder Schlauchklemmventile realisiert sein kann, je nach Programmierung der Kaffeebrühkammer 4 oder der Aufnahmekammer 6 oder beiden Vorrichtungen zugleich oder nacheinander zugeleitet.

Im Fall einer ausgewählten Kaffeezubereitung wird die Kaffeebrühkammer 4 mit losem Kaffeepulver beladen und nach Einschalten des Zubereitungsgerätes 1 mittels eines Netzschalters 23 gestartet. Anschließend wird das Zubereitungswasser aus einem Wasserbehälter mittel einer Pumpe 50 durch einen Durchlauferhitzer gepumpt und über die mittels der Steuervorrichtung freigeschaltete Ventilanordnung und ein flowmeter 51 in die Kaffeebrühkammer 4 gepumpt. Bei Einsatz eines Boilers wird das Wasser in diesem erhitzt und unter Dampfdruck über die Ventilanordnung 44 und ein flowmeter in die Kaffeebrühkammer gefördert. Der damit erzeugte Kaffeesud fließt aus dem Kaffeeauslauf 5 der Kaffeebrühkammer in das Aufnahmegefäß 25.

Zur Zubereitung eines Kaffee-Milchgetränkes wird die Kaffee-Brühkammer 4 der Brüheineinheit 3 des Zubereitungsgerätes 1 wie für eine Kaffeezubereitung mit losem Kaffeepulver beladen und in die Aufnahmevorrichtung 6 für die eine Milchpulverportionseinheit 14, 28 eingelegt. Dazu wird das Oberteil 9 der Aufnahmevorrichtung 6 nach oben geschwenkt und in einer ersten Verwendungsform die Milchpulverportionseinheit 14 mit integrierter Schäumvorrichtung in die zugehörige Aufnahme 7 eingelegt. Anschließend wird die Aufnahmevorrichtung 6 durch Abschwenken ihres Oberteils 9 druck- und flüssigkeitsdicht geschlossen und verriegelt, siehe Figur 1. Dabei wird mittels einer Prüfvorrichtung, die z.B. mit einem Mikroschalter 13 und der Steuerungsanordnung 48 realisiert ist, geprüft, ob sich eine Milchpulverportionseinheit in der Aufnahmevorrichtung 6 befindet bzw. ob das Aufnahmevorrichtungs-Oberteil 9 auf diese abgesenkt und verriegelt ist. Während des Absenkvorgangs wird die Wasserzuführleitung 40 an die Wasserzuführleitung 42 der Brüheinheit angedockt und mindestens eine Wasserzuführungsnadel 12 innerhalb der Aufnahmevorrichtung 6 in die Milchpulverportionseinheit 14 gestochen, wonach das Getränkezubereitungsgerät geschlossen ist und zur Getränkezubereitung vorbereitet ist.

Wenn für eine Milch- oder Milchschaumzubereitung durch entsprechenden Auswahlbefehl an die Steuerungsanordnung Heißwasser der Milchpulverportionseinheit 14 mit integrierter Schäumvorrichtung über das Keramikscheibenventil 44, bzw. eine andere Ventilanordnung und den Durchflussmesser 52 (flowmeter) der Heißwasserzulaufnadel 12 zugeleitet wird, löst sich das Milchpulver unter Erhitzung auf und bei Erreichen eines gerätesystemabhängigen Zubereitungswasserdruckes durchstoßen die Pyramiden 17 der Pyramidenplatte16 die aufliegende Trennfolie 19, wonach die erhitzte Milch durch den an einem Außenumfang der Pyramidenplatte 16 ausgebildeten Siebkamm 18 in das auf der Unterseite der Pyramidenplatte ausgeformte Schäumlabyrinth 20 fließt. In dem Schäumlabyrinth 20 wird die erhitzte Milch aufgeschäumt. Der entstandene Milchschaum fließt über dem Milchschaumauslauf 21 der Milchpulverportionseinheit in ein Aufnahmegefäß 25.

Im Nachfolgenden wird die Milch- oder Milchschaumzubereitung in einer zweiten Ausführungsform unter Verwendung einer Milchpulverportionseinheit 28 ohne integrierte Schäumvorrichtung beschrieben.

Das Beladen der Aufnahmekammer 7 mit der Milchpulverportionseinheit und der Milchaufbereitungsvorgang in der Portionseinheit 28 sind mit der ersten Ausführungsform identisch.

Das in der Milchpulverportionseinheit 28 aufgelöste Milchpulver vermischt sich in dieser mit dem Heißwasser und das Gemisch fließt, nachdem die Pyramiden 27 der Pyramidenplatte 16 bei einem von dem Gerätesystem vorgegebenen Wasserdruck die zwischen dem Milchpulver bzw. der entstandenen Milch und der Pyramidenplatte 16 angeordnete Trennfolie 19 durchstochen hat, durch den am Umfang der Pyramidenplatte 16 ausgeformten Siebkamm 29 und anschließend aus dem Milchauslauf 21 der Milchpulverportionseinheit 28 und die Durchgangsöffnung 22 des Brüheinheitunterteils in die Einlauföffnung 31 der unter der Durchgangsöffnung 22 angeordneten Schäumvorrichtung 39 die in fluidleitender Verbindung zu dem Auslauf der Milchpulverportionseinheit 28 steht. In der Schäumvorrichtung 39 wird die Strömung der noch unter dem Förderdruck der Pumpe 50 stehenden Milch durch die Milcheintrittsdüse 33 tangential in den Schäumzylinder 34 gefördert, wobei durch die im Wesentlichen spiralförmige Konfiguration der Zylinderwand 34a und durch die Positionierung der Milcheintrittsdüse 33 an einem durch die Zylinderwand gebildeten Vorsprung 34b ein Wirbel und in der Zone des Milcheintritts ein Unterdruck entstehen. Durch diesen Unterdruck wird auch aus der versetzt neben der Milcheintrittsdüse 33 in den Schäumzylinder 34 mündenden Luftdüse 37 Luft aus der Luftleitung 35 angesaugt, die zu der Atmosphäre offen ist. Durch diese Vorgänge entsteht in dem Schäumzylinder 34 Milchschaum der gewünschten Konsistenz, der durch die Bodenöffnung 38 des Schäumzylinders 39 austritt, die den Milchschaumauslauf darstellt.

Bei der Milchschaumerzeugung ist das in der Luftleitung 35 angeordnete Sperrventil 36 geöffnet. Wird das Sperrventil 36 hingegen geschlossen, was manuell oder programmgesteuert selbsttätig erfolgen kann und die Luftzufuhr zu dem Schäumzylinder 35 demgemäß gesperrt ist, so wird in diesem eine Schaumbildung weitgehend verhindert und es tritt aus der Bodenöffnung 38 des Schäumzylinders 39 erhitzte Milch aus.

Programmgesteuert kann damit in einer Ablauffolge Milch - Milchschaum - Espresso - Latte Macchiato erzeugt werden.

Insbesondere bei Verwendung einer Milchpulverportionseinheit 28 ohne einer integrierten Schäumvorrichtung ist es möglich, außer einem Kaffee-Milchgetränk lediglich heiße Milch oder unter Verwendung von losem Kakaopulver Milchkakao zuzubereiten.

Nach erfolgter Zubereitung des Getränkes kann die Milchpulverportionseinheit 14, 28 je nach Zubereitungsgerätetyp von Hand oder automatisch entsorgt werden.

### Bezugszahlenliste

- 1: Getränkezubereitungsgerät
- 2: Gerätesockel
- 3: Brüheinheit
- 4: Kaffeebrühkammer
- 5: Kaffeeauslauf
- 6: Aufnahmevorrichtung für Milchpulverportionseinheit
- 7: Aufnahmekammer
- 8: oberer Aufnahmekammerrand
- 9: Oberteil
- 10: Betätigungsgriff
- 11: Deckelplatte
- 12: Wasserzuführnadel
- 13: Mikroschalter ( Prüfelement )
- 14: Milchpulverportionseinheit mit integrierter Schäumvorrichtung
- 14a: Milchpulverportionseinheit, oberer Rand
- 15: Dichtung
- 16: Pyramidenplatte
- 17: Pyramidenplatte
- 18: Siebkamm
- 19: Trennfolie
- 20: Schäumlabyrinth
- 21: Milchpulverportionseinheit-Auslauf
- 22: Durchgangsöffnung
- 23: Netzschalter
- 24: Programmtastengruppe
- 25: Aufnahmegefäß
- 26: Ablauftrichter
- 27: Milchschaumauslauf
- 28: Milchpulverportionseinheit ohne integrierte Schäumvorrichtung
- 29: Siebkamm
- 30: Dichtung
- 31: Schäumvorrichtungseinlauföffnung
- 32: Verlängerungskanal
- 33: Milchaustrittsdüse
- 34: Schäumzylinder
- 34a: Spiralwand des Schäumzylinders
- 34b: Schäumzylinderwand-Absatz
- 35: Luftleitung
- 36: Luftsperrschieber
- 37: Luftdüse
- 38: Milchschaumauslauf
- 39: Schäumvorrichtung
- 40: Wasserzuführleitung
- 41: Anschlussstutzen
- 42: Wasserzuführleitung der Brüheinheit
- 43: waagerechte Achse
- 44: Keramikventil
- 45: Heißwasserzulauf
- 46: Wasserzuführleitung zur Wasserzuführnadel
- 47: Wasserzuführleitung zur Kaffeebrühkammer
- 48: Steuerungsanordnung
- 49: Motor
- 50: Wasserpumpe
- 51: Durchflussmesser (flow meter)
- 52: Durchflussmesser (flow meter)

## Patentansprüche

1. Brüheinheit eines Getränkezubereitungsgeräts mit einer ersten Aufnahmevorrichtung, die eine Kaffeebrühkammer (4) ist mit einem Auslauf, die zur Aufnahme von losem gemahlenen Kaffeepulver und Zubereitung eines Getränkes hieraus geeignet ist,
wobei eine zweite Aufnahmevorrichtung (6) mit einer Aufnahmekammer (7) mit einer im Boden liegende Durchgangsöffnung (22) vorgesehen ist, die zur Aufnahme einer Milch- oder Milchpulverportionseinheit (14, 28) und Zubereitung eines Milchproduktes, insbesondere Milchschaum, geeignet ist,
wobei die zweite Aufnahmevorrichtung (6) ein um eine im Wesentlichen waagerechte Achse (43) aufklappbares Aufnahmevorrichtungsoberteil (9) aufweist,
wobei im Oberteil (9) der zweiten Aufnahmevorrichtung (6) eine Wasserzuführungsleitung (40) mit einem Anschlussstutzen (41) zum Anschluss an eine Wasserzuführleitung (42) der Brüheinheit (3), eine Wasserzuführnadel (12) für die Milch- oder Milchpulverportionseinheit und ein Prüfelement (13) für eine Befüllungskontrolle der Aufnahmekammer (7) angeordnet sind und
wobei das Getränkezubereitungsgerät mit einem Dampfgenerator und einer Dampfdüse ausgestattet ist, die geeignet sind, mit Dampf und Frischmilch Milchschaum zuzubereiten oder mittels Dampf eine Flüssigkeit zu erhitzen.

2. Brüheinheit nach Anspruch 1,
**dadurch gekennzeichnet,**
**dass** die Innenform der Aufnahmekammer (7) jeweils an die Außenform der aufzunehmenden Milch- oder Milchpulverportionseinheit (14, 28) angepasst ist.

3. Brüheinheit nach Anspruch 1 oder 2,
**dadurch gekennzeichnet,**
**dass** die Aufnahmekammer (7) zur Aufnahme einer Milch- oder Milchpulverportionseinheit (14) mit integrierter Schäumvorrichtung geeignet ist.

4. Brüheinheit nach einem der Ansprüche 1, 2, 3,
**dadurch gekennzeichnet,**
**dass** unterhalb der Aufnahmekammer (7) ein Ablauftrichter (26) angeordnet ist.

5. Brüheinheit nach Anspruch 4,
**dadurch gekennzeichnet,**
**dass** der Ablauftrichter (26) austauschbar ist.

6. Brüheinheit nach Anspruch 1 oder 2,
**dadurch gekennzeichnet,**
**dass** die Aufnahmekammer (7) zur Aufnahme einer Milch- oder Milchpulverportionseinheit (28) ohne integrierter Schäumvorrichtung geeignet ist.

7. Brüheinheit nach einem der Ansprüche 1, 2, 6,
**dadurch gekennzeichnet,**
**dass** unterhalb der Aufnahmekammer (7) eine Schäumvorrichtung (39) angeordnet ist, die mit dem Auslauf (22) der Aufnahmekammer (7) in fluidleitender Verbindung steht.

8. Brüheinheit nach Anspruch 7,
**dadurch gekennzeichnet,**
**dass** die Schäumvorrichtung (39) austauschbar ist.

9. Brüheinheit nach den Ansprüchen 7 oder 8,
**dadurch gekennzeichnet,**
**dass** die Schäumvorrichtung (39) als Wegwerfteil ausgeführt ist.

10. Brüheinheit nach Anspruch 1,
**dadurch gekennzeichnet,**
**dass** der Auslauf (5) der Kaffeebrühkammer (4) und der Auslauf der Aufnahmekammer (7) zu einem gemeinsamen Auslauf zusammengeführt sind.

11. Brüheinheit nach Anspruch 1,
**dadurch gekennzeichnet,**
**dass** das Oberteil (9) der Aufnahmevorrichtung (6) mit Dichtungselementen (15) und Verriegelungselementen zum druck- und fluiddichten Verschluss der Aufnahmevorrichtung versehen ist.

12. Brüheinheit nach einem der Ansprüche 1 und 2,
**dadurch gekennzeichnet,**
**dass** der zweiten Aufnahmevorrichtung eine selbsttätige Auswerfervorrichtung für die Milch- oder Milchpulverportionseinheit zugeordnet ist.

13. Brüheinheit nach Anspruch 1,
**dadurch gekennzeichnet,**
**dass** an der ersten Aufnahmevorrichtung und an der zweiten Aufnahmevorrichtung eine für beide Aufnahmevorrichtungen gleichzeitig aktivierbare Spülvorrichtung vorgesehen ist.

14. Brüheinheit nach Anspruch 1 und 13
**dadurch gekennzeichnet,**
**dass** je eine Wasserzuführungsleitung an der Kaffeebrühkammer und an der zweiten Aufnahmevorrichtung für Milchpulverportionseinheit mündet,
**dass** die Wasserzuführung mit einer Steuerungsanordnung aktivierbar ist, die so ausgebildet ist, dass Wasser im Wesentlichen gleichzeitig der Kaffeebrühkammer und der zweiten Aufnahmevorrichtung zugeführt wird oder aber nur der Kaffeebrühkammer oder nur der zweiten Aufnahmevorrichtung.

15. Brüheinheit nach Anspruch 14,
**dadurch gekennzeichnet,**
**dass** die Steuerungsanordnung (48) gesteuerte Ventile umfasst, über welche die Wasserzufuhr zu der ersten Aufnahmekammer und zu der zweiten Aufnahmekammer erfolgt.

16. Brüheinheit nach Anspruch 15,
**gekennzeichnet durch**
Keramikscheibenventile als gesteuerte Ventile.

17. Brüheinheit nach einem Anspruch 15,
**gekennzeichnet durch**
Magnetventile als gesteuerte Ventile.

18. Brüheinheit nach Anspruch 15,
**gekennzeichnet durch**
Schlauchklemmventile als gesteuerte Ventile.

19. Brüheinheit nach einem der Ansprüche 1 und 14,
**dadurch gekennzeichnet,**
**dass** an der zweiten Aufnahmekammer eine Prüfeinheit (13) angeordnet ist, die mit der Steuerungsanordnung (48) in Verbindung steht, und
**dass** die Prüfeinheit und die Steuerungsanordnung so ausgebildet sind, dass eine Wasserzufuhr zu der zweiten Aufnahmevorrichtung nur dann freigeschaltet wird, wenn in die Aufnahmekammer (7) eine Portionseinheit eingesetzt ist.

20. Brüheinheit nach Anspruch 14,
**dadurch gekennzeichnet,**
**dass** die Steuerungsanordnung (48) geeignet ist, eine fest programmierte Reihenfolge und Menge der Wasserzufuhr in die erste Aufnahmekammern mit einer Kaffeepulverfüllung und in die zweite Aufnahmevorrichtung mit einer Milch- oder Milchpulverportionseinheit zu steuern, wodurch selbsttätig Cappuccino zubereitet wird.

21. Brüheinheit nach Anspruch 14,
**dadurch gekennzeichnet,**
**dass** in der Steuerungsanordnung (48) mehrere Programme für Reihenfolge und Menge der Wasserzufuhr in die beiden Aufnahmevorrichtungen mit einer Kaffeepulverfüllung und mit einer Milchpulverportion gespeichert sind, und
**dass** in der Steuerungsvorrichtung (48) eine Auswahlvorrichtung vorgesehen ist, mit der eines der gespeicherten Programme auswählbar ist.

22. Brüheinheit nach Anspruch 1,
**dadurch gekennzeichnet,**
**dass** die Milchpulverportionseinheiten mit einer elektrischen, optischen, mechanischen oder magnetischen Kennung versehen sind die mit einer Leseeinrichtung an der zweiten Aufnahmevorrichtung korrespondiert.

23. Brüheinheit den Ansprüchen 1 und 22,
**dadurch gekennzeichnet,**
**dass** an der zweiten Aufnahmevorrichtung (6) eine Leseeinrichtung angeordnet ist, die geeignet ist, eine Kennung an einer in die Aufnahmekammer (7) eingesetzten Portionseinheit zu lesen, und deren Ausgang mit der Steuerungsvorrichtung in signalübertragender Verbindung steht.

24. Brüheinheit nach den Ansprüchen 1; 14; 22; 23,
**dadurch gekennzeichnet,**
**dass** die Auswahleinrichtung mit der Leseeinrichtungen an der zweiten Aufnahmevorrichtung in signal-/datenübertragender Verbindung steht und die Auswahl eines festen Programms für Zubereitungsreihenfolge und -menge in der Steuerungsanordnung abhängig von der mit der Leseeinrichtung erkannten Portionseinheit steuert.

25. Brüheinheit nach Anspruch 1,
**dadurch gekennzeichnet,**
**dass** Kontrollelemente vorgesehen sind, die die Zubereitungswasserzufuhr stoppen, sobald die erste oder die zweite Aufnahmevorrichtung geöffnet ist.

## Claims

1. A brewing unit of a drinks preparation device having a first receiving device, which is a coffee brewing chamber (4) with an outflow, which is adapted for receiving loose, ground coffee powder and preparing a drink thereof,
wherein a second receiving device (6) having a receiving chamber (7) with a lead-through opening (22) disposed in the bottom is provided, which is adapted for receiving a milk serving unit or milk powder serving unit (14, 28) and preparing a milk product, especially milk froth,
wherein the second receiving device (6) has a receiving device upper portion (9) hinged about an essentially horizontal axis (43),
wherein in the upper portion (9) of the second receiving device (6) a water supply line (40) with a connection piece (41) for connecting the brewing unit (3) to a water supply line (42), a water supply pin (12) for the milk or milk powder serving units and a test element (13) for a loading control of the receiving chamber (7) are arranged and
wherein the drinks preparation device is provided with a vapour generator and a vapour nozzle which are adapted for preparing milk froth from vapour and fresh milk or heating a fluid by means of vapour.

2. The brewing unit according to claim 1,
**characterised in that**
the inner shape of the receiving chamber (7) is adapted to the respective outer shape of the milk serving unit or milk powder serving unit (14, 28) to be received.

3. The brewing unit according to claim 1 or 2,
**characterised in that**
the receiving chamber (7) is adapted for receiving a milk serving unit or milk powder serving unit (14) with integrated frothing device.

4. The brewing unit according to one of the claims 1, 2, 3,
**characterised in that**
below the receiving chamber (7) a drain funnel (26) is arranged.

5. The brewing unit according to claim 4,
**characterised in that**
the drain funnel (26) is replaceable.

6. The brewing unit according to claim 1 or 2,
**characterised in that**
the receiving chamber (7) for receiving a milk serving unit or milk powder serving unit (28) is usable without an integrated frothing device.

7. The brewing unit according to one of the claims 1, 2, 6,
**characterised in that**
below the receiving chamber (7) a frothing device (39) is arranged, which is in fluid communication with the spout (22) of the receiving chamber (7).

8. The brewing unit according to claim 7,
**characterised in that**
the frothing device (39) is replaceable.

9. The brewing unit according to the claims 7 or 8,
**characterised in that**
the frothing device (39) is realised as a disposable unit.

10. The brewing unit according to claim 1,
**characterised in that**
the spout (5) of the coffee brewing chamber (4) and the spout of the receiving chamber (7) are combined to form a single spout.

11. The brewing unit according to claim 1
**characterised in that**
the upper portion (9) of the receiving device (6) is provided with sealing elements (15) and locking elements for pressure- and fluid-tight locking the receiving device.

12. The brewing unit according to one of the claims 1 and 2,
**characterised in that**
the second receiving device is associated to a self-acting ejecting device for the milk serving unit or milk powder serving unit.

13. The brewing unit according to claim 1,
**characterised in that**
at the first receiving device and the second receiving device a rinsing device simultaneously actionable for both receiving devices is provided.

14. The brewing unit according to claim 1 and 13
**characterised in that**
a water supply line is connected to each one of the coffee brewing chamber and the second receiving device for milk powder serving unit,
the water supply is actionable by a control assembly, which is formed such that water is supplied to the coffee brewing chamber and the second receiving device in an essentially simultaneous manner or is supplied only to the coffee brewing chamber or only to the second receiving device.

15. The brewing unit according to claim 14,
**characterised in that**
the control assembly (48) comprises controlled valves, through which the water supply to the first receiving chamber and the second receiving chamber is performed.

16. The brewing unit according to claim 15,
**characterised by**
ceramic disc valves as the controlled valves.

17. The brewing unit according to claim 15,
**characterised by**
magnetic valves as the controlled valves.

18. The brewing unit according to claim 15,
**characterised by**
tubing clamp valves as the controlled valves.

19. The brewing unit according to one of the claims 1 and 14, **characterised in that**
at the second receiving chamber a test unit (13) is arranged, which is in contact with the control assembly (48), and the test unit and the control assembly are formed such that a water supply to the second receiving device is not enabled unless a serving unit is inserted into the receiving chamber (7),

20. The brewing unit according to claim 14,
**characterised in that**
the control assembly (48) is adapted to control a fixedly set order and amount of the water supply into the first receiving chambers with a coffee powder filling and into the second receiving device with a milk serving unit or milk powder serving unit, thereby automatically preparing Cappuccino.

21. The brewing unit according to claim 14,
**characterised in that**
in the control assembly (48) multiple programmes for the order and amount of the water supply to both receiving devices comprising a filling of both coffee powder and milk powder for one serving are stored, and
in the control device (48) a selection device is provided by which one of the stored programmes is selectable.

22. The brewing unit according to claim 1,
**characterised in that**
the milk powder serving units are provided with an electrical, optical, mechanical or magnetic identification number which corresponds with a reading device at the second receiving device.

23. Brewing unit according to the claims 1 and 22,
**characterised in that**
a reading device is arranged at the second receiving device (6), which is adapted for reading an identification number on a serving unit inserted into the receiving chamber (7), and the exit of which is in signal transmitting communication with the control device.

24. The brewing unit according to den claims 1; 14; 22; 23,
**characterised in that**
the selection unit is in signal/data transmitting communication with the reading devices at the second receiving device and controls selection of a fixed routine for the preparation order and preparation amount in the control assembly depending on the serving unit identified by the reading device.

25. The brewing unit according to claim 1,
**characterised in that**
control elements are provided which stop the preparation water supply once the first or the second receiving device is open.

## Revendications

1. Unité d'infusion d'un appareil de préparation de boissons avec un premier dispositif de réception, qui est une chambre d'infusion de café (4) avec une sortie, le dispositif de réception étant approprié pour la réception de café en poudre moulu en vrac et pour la préparation d'une boisson à partir de ce dernier,
dans laquelle un deuxième dispositif de réception (6) avec une chambre de réception (7), équipée d'un orifice de passage (22) situé dans le fond est prévu, le deuxième dispositif étant approprié pour la réception d'une unité correspondant à une portion de lait ou de lait en poudre (14, 28) et pour la préparation d'un produit lacté, notamment de la mousse de lait,
dans laquelle le deuxième dispositif de réception (6) présente une partie supérieure de dispositif de réception (9), pouvant se replier à l'état ouvert par rapport à un axe (43) sensiblement vertical,
dans laquelle, dans la partie supérieure (9) du deuxième dispositif de réception (6), sont agencés une conduite d'alimentation en eau (40) avec un raccord (41) pour le raccordement sur une canalisation d'alimentation en eau (42) de l'unité d'infusion (3), une tubulure d'alimentation en eau très fine (12) pour l'unité correspondant à une portion de lait ou de lait en poudre et un élément de contrôle (13) pour le contrôle du remplissage de la chambre de réception (7), et
dans laquelle l'appareil de préparation de boissons est équipé d'un générateur de vapeur et d'une buse de vapeur qui sont appropriés pour préparer de la mousse de lait en utilisant du lait frais et de la vapeur ou pour réchauffer un liquide au moyen de vapeur.

2. Unité d'infusion selon la revendication 1,
**caractérisée en ce**
**que** la forme de l'intérieur de la chambre de réception (7) est ajustée avec la forme extérieure recevant respectivement la portion unitaire de lait ou de lait en poudre (14, 28).

3. Unité d'infusion selon les revendications 1 ou 2,
**caractérisée en ce**
**que** la chambre de réception (7) est appropriée pour la réception d'une unité correspondant à une portion de lait ou de lait en poudre avec un dispositif de moussage intégré.

4. Unité d'infusion selon l'une des revendications 1, 2, 3,
**caractérisée en ce**
**qu'**un entonnoir d'écoulement (26) est disposé en dessous de la chambre de réception (7).

5. Unité d'infusion selon la revendication 4,
**caractérisée en ce**
**que** l'entonnoir d'écoulement (26) peut être échangé.

6. Unité d'infusion selon les revendications 1 ou 2,
**caractérisée en ce**
**que** la chambre de réception (7) est appropriée pour la réception d'une unité correspondant à une portion de lait ou de lait en poudre (28) sans dispositif de moussage intégré.

7. Unité d'infusion selon l'une des revendications 1, 2, 6,
**caractérisée en ce**
**qu'**un dispositif de moussage (39) est disposé en dessous de la chambre de réception (7), qui est en liaison par voie fluide avec la sortie (22) de la chambre de réception (7).

8. Unité d'infusion selon la revendication 7,
**caractérisée en ce**
**que** le dispositif de moussage (39) peut être échangé.

9. Unité d'infusion selon les revendications 7 ou 8,
**caractérisée en ce**
**que** le dispositif de moussage (39) est conçu sous la forme d'une partie à usage unique.

10. Unité d'infusion selon la revendication 1,
**caractérisée en ce**
**que** la sortie (5) de la chambre d'infusion de café (4) et la sortie de la chambre de réception (7) se joignent pour former une sortie commune.

11. Unité d'infusion selon la revendication 1
**caractérisée en ce**
**que** la partie supérieure (9) du dispositif de réception (6) est pourvue d'éléments d'étanchéité (15) et d'éléments de verrouillage pour une fermeture étanche vis-à-vis de la pression et des fluides.

12. Unité d'infusion selon l'une des revendications 1 et 2,
caractérisée en n ce
qu'un dispositif d'éjection automatique de l'unité correspondant à une portion de lait ou de lait en poudre est associé au deuxième dispositif de réception.

13. Unité d'infusion selon la revendication 1,
**caractérisée en ce**
**qu'**un dispositif de nettoyage pouvant être activé simultanément pour les deux dispositifs de réception est prévu sur le premier dispositif de réception et sur le deuxième dispositif de réception.

14. Unité d'infusion selon les revendications 1 et 13
**caractérisée en ce**
**qu'**un tube d'alimentation en eau débouche dans la chambre d'infusion de café et un autre tube d'alimentation en eau débouche dans le deuxième dispositif de réception d'unité correspondant à une portion de lait en poudre, que l'alimentation en eau peut être activée avec un système de commande qui est conçu de telle manière que de l'eau puisse être alimentée pratiquement simultanément dans la chambre d'infusion du café et dans le deuxième dispositif de réception, ou uniquement dans la chambre d'infusion de café, ou uniquement dans le deuxième dispositif de réception.

15. Unité d'infusion selon la revendication 14,
**caractérisée en ce**
**que** le système de commande (48) comprend des vannes commandées par lesquelles l'alimentation en eau est effectuée vers la première chambre de réception et vers la deuxième chambre de réception.

16. Unité d'infusion selon la revendication 15,
**caractérisée par**
des vannes céramiques sous forme de disques servant de vannes commandées.

17. Unité d'infusion selon une revendication 15,
**caractérisée par**
des vannes magnétiques servant de vannes commandées.

18. Unité d'infusion selon la revendication 15,
**caractérisée par**
des vannes à pincement de tuyau servant de vannes commandées.

19. Unité d'infusion selon l'une des revendications 1 et 14,
**caractérisée en ce**
**qu'**une unité de contrôle (13) est disposée au niveau de la deuxième chambre de réception, qui est en liaison avec le système de commande (48) et que l'unité de contrôle et le système de commande sont conçus de telle manière qu'une alimentation en eau vers le deuxième dispositif de réception n'est permise que lorsqu'une unité correspondant à une portion est insérée dans la chambre de réception (7).

20. Unité d'infusion selon la revendication 14,
**caractérisée en ce**
**que** le système de commande (48) est approprié pour commander une suite programmée de manière fixe et une quantité fixe d'alimentation en eau dans la première chambre de réception avec un remplissage de café en poudre et dans le deuxième dispositif de réception avec une unité correspondant à une portion de lait ou de lait en poudre, ce par quoi du cappuccino est préparé de manière automatique.

21. Unité d'infusion selon la revendication 14,
**caractérisée en ce**
**que** le système de commande (48) contient en mémoire plusieurs programmes pour des suites et des quantités d'alimentation en eau dans les deux dispositifs de réception avec un remplissage de café en poudre et avec une portion de lait en poudre, et
**qu'**un dispositif de sélection est prévu dans le dispositif de commande (48) par lequel l'un des programmes en mémoire peut être choisi.

22. Unité d'infusion selon la revendication 1,
**caractérisée en ce**
**que** les unités correspondant à une portion de lait en poudre sont munies d'un système de marquage de reconnaissance électrique, optique, mécanique ou magnétique qui est en correspondance avec un système de lecture dans le deuxième dispositif de réception.

23. Unité d'infusion selon les revendications 1 et 22,
**caractérisée en ce**
**qu'**un système de lecture est disposé sur le deuxième dispositif de réception (6) qui est approprié pour lire un marquage de reconnaissance de la présence d'une unité correspondant à une portion insérée dans la chambre de réception (7), et dont la sortie est en communication par la transmission d'un signal avec le dispositif de commande.

24. Unité d'infusion selon les revendications 1, 14, 22, 23,
**caractérisée en ce**
**que** le système de sélection est en liaison par signal / par transfert de données avec les systèmes de lecture sur le deuxième dispositif de réception et qu'il pilote la sélection d'un programme défini pour la suite des préparations et des quantités dans le système de commande en fonction de l'unité correspondant à une portion reconnue par le système de lecture.

25. Unité d'infusion selon la revendication 1,
**caractérisée en ce**
**que** des éléments de contrôle sont prévus, qui arrêtent l'alimentation en eau de la préparation dès que le premier dispositif de réception, ou le deuxième dispositif de réception, est ouvert.
